# EUROPÄISCHE PATENTANMELDUNG

(11) **EP 2 644 979 A2**
(43) Veröffentlichungstag der Anmeldung: **02.10.2013**
(21) Anmeldenummer: 13001393.1
(22) Anmeldetag: 18.03.2013
(51) Int. Cl.: F21V 7/04, F21V 7/22, F21V 17/14, F21V 17/16, F21Y 101/02

(54) **Leuchte, Reflektor für eine Leuchte und Verfahren zum Herstellen des Reflektors**

(30) Priorität: 29.03.2012 DE 102012009539
(71) Anmelder: Auer Lighting GmbH, 37581 Bad Gandersheim (DE)
(72) Erfinder: Becker, Ralf, 37581 Bad Gandersheim (DE); Hoffmann, Markus, 38667 Bad Harzburg (DE)
(74) Vertreter: Friedrich, Andreas

(57) **Zusammenfassung**

Die Erfindung betrifft eine Leuchte mit wenigstens einer LED (14), einem Basisteil (12), das mit der wenigstens einen LED (14) starr verbunden ist und das wenigstens eine Basiskontaktfläche (24) aufweist, sowie einem Reflektor (2), der wenigstens eine Reflektorkontaktfläche (22), eine Eintrittsöffnung (6) und eine Austrittsöffnung (4) und eine Längsrichtung (L), die von der Austrittsöffnung (4) zu der Eintrittsöffnung (6) verläuft, aufweist und der mit dem Basisteil (12) verbindbar ist, wobei die wenigstens eine Reflektorkontaktfläche (22) in Längsrichtung (L) zwischen der Eintrittsöffnung (6) und der Austrittsöffnung (4) angeordnet ist und die wenigstens eine Basiskontaktfläche (24) an der wenigstens einen Reflektorkontaktfläche (22) anliegt und so eine Verschiebung des Basisteils (12) und/oder des Reflektors (2) aufeinander zu verhindert, wenn der Reflektor (2) mit dem Basisteil (12) verbunden ist. Der Reflektor (2) ist so geformt, dass eine Projektion der wenigstens einen Reflektorkontaktfläche (22) in Längsrichtung (L) des Reflektors (2) hinterschneidungsfrei ist.

## Beschreibung

Die Erfindung betrifft eine Leuchte mit wenigstens einer LED, einem Basisteil, das mit der wenigstens einen LED starr verbunden ist und das wenigstens eine Basiskontaktfläche aufweist, sowie einem Reflektor, der wenigstens eine Reflektorkontaktfläche, eine Eintrittsöffnung und eine Austrittsöffnung und eine Längsrichtung, die von der Austrittsöffnung zu der Eintrittsöffnung verläuft, aufweist, und der mit dem Basisteil verbindbar ist, wobei die wenigstens eine Reflektorkontaktfläche in Längsrichtung zwischen der Eintrittsöffnung und der Austrittsöffnung angeordnet ist und die wenigstens eine Basiskontaktfläche an der wenigstens einen Reflektorkontaktfläche anliegt und so eine Verschiebung des Basisteils und/oder des Reflektors aufeinander zu verhindert, wenn der Reflektor mit dem Basisteil verbunden ist. Die Erfindung betrifft zudem einen Reflektor für eine derartige Leuchte und ein Verfahren zum Herstellen eines solchen Reflektors.

Herkömmlicherweise ist bei einer gattungsgemäßen Leuchte wenigstens eine LED vorgesehen, die auf einem LED-Halbleiterchip befestigt ist, der an dem Basisteil befestigt ist. Dieses Basisteil dient in diesem Fall als Verbindungsbauteil zwischen der eigentlichen LED bzw. dem LED-Halbleiterchip und dem Reflektor der Leuchte. Die Befestigung der beiden Bauteile aneinander erfolgt beispielsweise durch eine Clipverbindung. In diesem Fall umfasst beispielsweise das Basisteil elastische Clips, die beim Einsetzen des Reflektors aufgebogen werden und in dafür vorgesehene Schlitze, Löcher oder Durchlässe am Reflektorkörper einrasten.

Der Reflektor selbst weist eine Längsrichtung und eine Eintritts- und eine Austrittsöffnung auf. Dabei erstreckt sich die Längsrichtung des Reflektors von dessen Eintrittsöffnung zur Austrittsöffnung. Die Austrittsöffnung ist dabei die Öffnung, durch die das Licht, das von der wenigstens einen LED ausgesandt wird, den Reflektor und damit die Leuchte verlässt. Die Längsrichtung fällt bei den meisten Reflektoren mit der optischen Achse und der Symmetrieachse des Reflektors zusammen und weist in diesem Fall auf die wenigstens eine LED.

Der Reflektor weist zumeist eine Innenfläche auf, die beispielsweise facettiert sein kann, um die gewünschte Lichtabstrahlcharakteristik zu erreichen. Dazu ist es jedoch zudem nötig, die LED möglichst exakt an der gewünschten Position anzuordnen. Dies kann beispielsweise bei einem Reflektor mit elliptischer Reflektorinnenfläche ein Brennpunkt der Ellipse sein. Es kann auch gewünscht sein, die LED kurz vor oder hinter diesem Brennpunkt anzuordnen. Der Punkt, an dem die LED angeordnet werden muss, um gemeinsam mit der Formgebung der Reflektorinnenfläche die gewünschte Lichtabstrahlcharakteristik zu erreichen, wird Arbeitspunkt genannt. Dieser befindet sich zumeist innerhalb des Reflektors, so dass die LED durch die Eintrittsöffnung des Reflektors in diesen hineinragt. Um die gewünschte Abstrahlcharakteristik zu erreichen, ist eine möglichst exakte Positionierung der LED am Arbeitspunkt erforderlich.

Um diese exakte Positionierung gewährleisten zu können, sind die wenigstens eine Reflektorkontaktfläche und die wenigstens eine Basiskontaktfläche vorgesehen. Beide liegen aneinander an, wenn der Reflektor mit dem Basisteil verbunden ist und verhindern so eine weitere Verschiebung der beiden Bauteile aufeinander zu. Damit ist eine reproduzierbare, sehr definierte und gut bekannte Positionierung der beiden Bauteile relativ zueinander möglich. Sofern die wenigstens eine Reflektorkontaktfläche und die wenigstens eine Basiskontaktfläche genau gefertigt werden, ist auf diese Weise reproduzierbar einstellbar, wie weit die LED in den Reflektor hineinragt. Doch auch für den Fall, dass die LED nicht im Innenraum des Reflektors angeordnet werden soll, ist die exakte Positionierung des Reflektors relativ zum Basisteil wichtig. Auch in diesem Fall geht es um die Positionierung des Reflektors relativ zur LED, damit das von der LED ausgesandte durch die Eintrittsöffnung in den Reflektor eintretende Licht die gewünschte Abstrahlcharakteristik aufweist, wenn es den Reflektor durch die Austrittsöffnung verlässt.

Herkömmlicherweise ist die Reflektorkontaktfläche der Bereich direkt um die Eintrittsöffnung des Reflektors. Der Reflektor liegt dann im verbundenen Zustand vorteilhafterweise vollflächig mit diesem Bereich auf dem entsprechenden Bereich des Basisteils um die LED herum auf.

Nachteilig ist jedoch, dass eine derartige Leuchte relativ aufwändig in der Herstellung ist. Herkömmlicherweise wird ein Reflektor für eine derartige Leuchte aus einem Glas oder einer Glaskeramik gepresst. Dazu wird zunächst eine gewünschte Menge des Glases oder der Glaskeramik in eine Form gegeben und anschließend in dieser Form zwischen zwei beweglichen Formteilen gepresst, bis er die gewünschte Kontur aufweist. Dabei ist der so hergestellte Reflektor zwar bereits mit einer Austrittsöffnung, noch nicht jedoch mit einer Eintrittsöffnung versehen. Diese wird in einer bevorzugten Ausgestaltung eines derartigen Verfahrens durch ein so genanntes "Hotpunch"-Verfahren hergestellt. Dabei wird ein Dorn oder Stößel an der gewünschten Stelle durch den gepressten Reflektor hindurch geführt. Damit der aus Glas bestehende Reflektor bei diesem Verfahren nicht bricht, muss er erwärmt werden oder das Eindrücken des Stößels muss so schnell erfolgen, dass der Reflektor nach dem Pressen noch nicht abgekühlt ist. Dabei kommt es jedoch zu einem Verformen des Bereichs des Reflektors, der um die gewünschte Eintrittsöffnung herum liegt. Da dieser Bereich jedoch die Reflektorkontaktfläche bildet, muss er aufwändig nachbearbeitet, beispielsweise gesägt oder gefräst werden. Dies ist aufwändig und daher kostenintensiv. Zudem ist es fehleranfällig, da die so nachbehandelte Reflektorkontaktfläche möglichst exakt senkrecht auf der optischen Achse des Reflektors stehen, möglichst glatt sein, und in möglichst genau der richtigen Höhe relativ zum Arbeitspunkt des Reflektors angeordnet werden muss. Da das Sägen bzw. Fräsen zum Nacharbeiten der Reflektorkontaktfläche in einem separaten Arbeitsschritt erfolgen muss, geht dabei zwangsweise der Bezug zu den optisch relevanten Punkten auf der Innenfläche des Reflektors und damit der exakten Lage des Arbeitspunktes verloren.

Zudem kommt zu den Fertigungstoleranzen, die beim Pressen des Reflektors und beim Herstellen des Basisteils eine Rolle spielen, eine weitere Toleranz des Sägeschnitts bzw. der Fräsebene hinzu. Dadurch wird die mit vertretbarem Aufwand erreichte Genauigkeit folglich stark heruntergesetzt.

Alternativ könnte auch die Eintrittsöffnung nicht im "Hotpunch"-Verfahren, sondern beispielsweise durch Einfräsen in den Reflektor eingebracht werden. Damit würde, da die Umgebung der so hergestellten Eintrittsöffnung durch das Verfahren nicht oder nur kaum beeinträchtigt wird, ein aufwändiges Nacharbeiten unnötig. Jedoch ist das Einfräsen oder Bohren der Eintrittsöffnung im Vergleich zum "Wotpunch"-Verfahren zeitaufwändig und somit kostenintensiv. Zudem muss auch zum Einfräsen ein separates Werkzeug verwendet werden, was die bereits genannten Probleme bei der Fertigungstoleranz mit sich bringt. Auch diese Ausgestaltung weist folglich Nachteile auf.

Alternativ ist es aus dem Stand der Technik bekannt, die exakte Positionierung des Reflektors relativ zur LED nicht über die oben beschriebenen Kontaktflächen, die um die Eintrittsöffnung herum angeordnet sind, herzustellen, sondern zu diesem Zweck seitlich in den Reflektorhals Rillen oder Vertiefungen einzuprägen, zu sägen oder zu fräsen, in die am Basisteil vorhandene Strukturen möglichst exakt einrasten, Auch damit könnte eine spielfreie Lagerung erreicht werden. Allerdings führt auch das Einbringen der Rillen oder Vertiefungen in den gepressten Reflektor zu einem weiteren Arbeitsschritt und den daraus resultierenden Genauigkeits- und Toleranzproblemen. Auch damit ist eine einfache und genaue Positionierung des Reflektors relativ zur LED folglich nicht möglich.

Die nachveröffentlichte WO 20121158404 A1 zeigt einen Reflektor für eine Leuchte, dessen Reflektorkontaktfläche um die Eintrittsöffnung des Reflektors herum angeordnet ist. Wenn die Eintrittsöffnung in den Reflektorkörper eingebracht wird, treten folglich die beschriebenen Probleme auf.

Aus der EP 1 961 708 A1 ist ein Verfahren zur Herstellung von Reflektoren aus Glas bekannt, bei denen die Eintrittsöffnung mit dem Hot Punch Verfahren in den Reflektorkörper eingebracht wird. Der Teil des Reflektorkörpers, in den die Eintrittsöffnung eingebracht wird, wird dabei durch eine spezielle Haltavorrichtung abgestützt, sodass es nicht zur Fädenbildung des erwärmten Glases kommen kann.

Auch die US 200410264200 A1 befasst sich mit einem Verfahren zum Herstellen eines Reflektors für eine Leuchte, wobei unterschiedliche Möglichkeiten dargestellt werden, die Eintrittsöffnung in den Reflektorkörper einzubringen. Bei allen Verfahren muss jedoch der untere Bereich des Reflektorkörpers, in den die Eintrittsöffnung eingebracht wurde, thermisch nachbehandelt werden.

Die US 2011/0019409 A1 sowie die DE 10 2010 031 312 A1 befassen sich mit der Befestigung von LED Trägerelementen an einer Auflage. Hierbei soll eine möglichst gute Wärmeleitfähigkeit und thermische Ankopplung erreicht werden.

Aus der WO 2011/104 255 A1 ist ein sogenanntes Downlight, also eine nach unten scheinende Leuchte bekannt, bei der der Reflektor lediglich durch ein Aufliegen an einem Einbauring gehalten wird. Ein Kontakt zu einem Basisteil, an dem die LEDs angeordnet sind, findet nicht statt.

Aus der DE 10 2009 047 493 A1 ist eine Leuchtvorrichtung und ein Aufsatzelement zur Befestigung an einer Leuchtvorrichtung bekannt, bei der an der LED zugewandten Seite des Reflektor ein Verschlusselement eines Bajonettverschlusses angeordnet ist. Die Reflektorkontaktfläche bildete da bei den äußersten Rand der Eintrittsöffnung des Reflektors.

Der Erfindung liegt somit die Aufgabe zugrunde, eine Leuchte vorzuschlagen, bei der der Reflektor relativ zur LED mit ausreichender Genauigkeit positionierbar ist und die einfach, schnell und kostengünstig herstellbar ist. Zudem soll ein entsprechender Reflektor und ein Herstellungsverfahren für einen solchen Reflektor vorgeschlagen werden.

Die Erfindung löst die gestellte Aufgabe durch eine gattungsgemäße Leuchte, die sich dadurch auszeichnet, dass der Reflektor derart geformt ist, dass eine Projektion der wenigstens einen Reflektorkontaktfläche in Längsrichtung des Reflektors hinterschneidungsfrei ist. Mit anderen Worten befindet sich folglich von der wenigstens einen Reflektorkontaktfläche ausgehend in Längsrichtung des Reflektors kein weiterer Anteil des Reflektors. Wird der Reflektor beispielsweise so angeordnet, dass sich die Austrittsöffnung oben und die Eintrittsöffnung unten befinden, verläuft die Längsrichtung von oben nach unten. Bei einem erfindungsgemäßen Reflektor befindet sich folglich von der wenigstens einen Reflektorkontaktfläche ausgehend nach unten kein weiterer Reflektoranteil, so dass die Projektion der wenigstens einen Reflektorkontaktfläche in dieser Richtung hinterschneidungsfrei ist.

Dies bedeutet jedoch nicht, dass die wenigstens eine Reflektorkontaktfläche der unterste Anteil des Reflektors in dieser Ausrichtung wäre. Im Gegenteil ist bei einem Reflektor einer gattungsgemäßen Leuchte die wenigstens eine Reflektorkontaktfläche in Längsrichtung zwischen der Eintrittsöffnung und der Austrittsöffnung angeordnet. Es gibt folglich bei der genannten Ausrichtung sowohl Anteile des Reflektors, die weiter oben angeordnet sind, als auch Anteile des Reflektors, die weiter unten angeordnet sind, als die wenigstens eine Reflektorkontaktfläche. Lediglich direkt unterhalb der wenigstens einen Reflektorkontaktfläche befindet sich kein weiterer Anteil des Reflektors. Anders als im Stand der Technik ist die wenigstens eine Reflektorkontaktfläche somit insbesondere nicht eine Wandung einer Nut, die in den Reflektor eingebracht ist. Anschaulich gesprochen ist die wenigstens eine Reflektorkontaktfläche in dieser Anordnung des Reflektors in einer senkrechten Ansicht von unten sichtbar. Diese Anordnung der wenigstens einen Reflektorkontaktfläche hat den Vorteil, dass bei einem herkömmlichen Pressvorgang die wenigstens eine Reflektorkontaktfläche mit einer hohen Genauigkeit gepresst werden kann. Es ist folglich kein zweiter nachträglicher Arbeitsschritt möglich, um beispielsweise durch einen teuren Säge- oder Fräsvorgang die wenigstens eine Reflektorkontaktfläche nachzubearbeiten oder an dem Reflektor anzuformen. Damit wird zudem die Verwendung eines weiteren Werkzeuges überflüssig, so dass sich auch die Fertigungstoleranzen der jeweiligen Werkzeuge und Verfahrensschritte nicht mehr addieren, so dass insgesamt eine exaktere Ausgestaltung des Reflektors und damit einer exaktere Positionierung des Reflektors relativ zu der wenigstens einen LED der Leuchte möglich werden.

In einer speziellen Ausgestaltung eines derartigen Reflektors können beispielsweise an einer Außenseite des Reflektors ein umlaufender Steg oder beispielsweise mehrere einzelne Stege angeordnet sein, die jeweils eine Reflektorkontaktfläche bilden. Der Reflektor wird dann nur über die konkrete Ausgestaltung dieser wenigstens einen Reflektorkontaktfläche und der entsprechenden wenigstens einen Basiskontaktfläche relativ zu der wenigstens einen LED positioniert.

Für einen Reflektor für eine erfindungsgemäße Leuchte kommt es daher auf die Form des Halsbereichs des Reflektors, in dem sich die Eintrittsöffnung des Reflektors befindet, nicht an, da dieser nicht mehr zur Positionierung des Reflektors relativ zu der wenigstens einen LED verwendet wird. Dieser Bereich könnte folglich schräg oder auf sonstige Weise unregelmäßig geformt sein, ohne dass die Positioniergenauigkeit des Reflektors relativ zur LED beeinträchtigt würde. Daher kann die Eintrittsöffnung in einen derartigen Reflektor besonders einfach durch das so genannte Hotpunch-Verfahren eingebracht werden, da die Verformung der um die Eintrittsöffnung herum angeordneten Flächen unproblematisch ist.

In einer bevorzugten Ausführungsform umfasst die Leuchte Vorspannmittel, die die wenigstens eine Reflektorkontaktfläche gegen die wenigstens eine Basiskontaktfläche vorspannen. Diese sind für die eigentliche Positionierung des Reflektors relativ zur wenigstens einen LED nicht notwendig, sorgen jedoch dafür, dass der Reflektor im einmal mit dem Basisteil verbundenen Zustand die so eingestellte Position nicht wieder verlässt. Dazu können sich beispielsweise auf der Außenseite des Reflektors Rillen oder andere Elemente zur mechanischen Halterung befinden, mit deren Hilfe der Reflektor an dem Basisteil festgelegt, beispielsweise angeclipst wird. Bevorzugt befinden sich diese Elemente zur mechanischen Halterung und die dafür vorgesehenen Strukturen ebenfalls an den Stegen bzw. an den umlaufenden Steg, an dem sich auch die wenigstens eine Reflektorkontaktfläche befindet. Alternativ ist auch denkbar, dass sich diese Strukturen nicht an den Stegen selbst befinden, sondern von diesen räumlich getrennt an der Reflektoraußenfläche angebracht sind. Als Strukturen kommen beispielsweise Auswölbungen, Vorsprünge, Eindellungen, Nuten oder Rillen an der Reflektoraußenfläche in Frage, welche durch entsprechende gegenteilig ausgebildete mechanische Strukturen, die an dem Basisteil realisiert sind, mit dem Basisteil in Eingriff gebracht werden können. Auf diese Weise ist es möglich, den Reflektor an dem Basisteil auf besonders einfache Weise, beispielsweise durch Einrasten oder Einclipsen oder beispielsweise mittels eines Bajonettverschlusses, zu befestigen. Auf die optische Justierung des Reflektors relativ zu der wenigstens einen LED haben diese Strukturen, wie bereits dargelegt, keinen Einfluss, so dass sie nicht mit der gleichen Genauigkeit gefertigt werden müssen.

Als Vorteil hat sich dabei herausgestellt, dass dadurch, dass die Umgebung der Eintrittsöffnung nicht mehr am Basisteil anliegt, an dieser Stelle ein Luftspalt entsteht, der zur Kühlung der Leuchte verwendet werden kann.

Vorzugsweise verfügt der Reflektor über eine Außenfläche, die wenigstens eine Vertiefung aufweist, in die die Vorspannmittel eingreifen, wenn der Reflektor mit dem Basisteil verbunden ist. Die Vorspannmittel selbst müssen dabei nicht einstückig mit dem Basisteil ausgebildet sein, sondern können dann auch als separate Bauteile ausgeführt werden. So ist es beispielsweise denkbar, an dem Basisteil federbelastete Stifte vorzusehen, die bei korrekter Positionierung des Reflektors relativ zum Basisteil in in dem Reflektor vorgesehene Vertiefungen eingreifen und so eine Kraft auf den Reflektor ausüben und die Reflektorkontaktfläche gegen die Basiskontaktfläche vorspannen.

In einer bevorzugten Ausführungsform verfügt die Leuchte über wenigstens zwei Reflektorkontaktflächen und wenigstens zwei Basiskontaktflächen. Somit ist eine einfache und sichere Positionierung des Reflektors relativ zu dem Basisteil und damit relativ zu der mit dem Basisteil starr verbundenen LED gewährleistet. Die Anzahl und Anordnung der einzelnen Kontaktflächen kann den jeweiligen Anforderungen entsprechend frei gewählt werden.

Vorzugsweise verfügt der Reflektor entlang seiner Längsrichtung über eine Längserstreckung D. Ein Abstand d der wenigstens einen Vertiefung, in die die Vorspannmittel eingreifen, von der Eintrittsöffnung beträgt in Längsrichtung weniger als ein Drittel, vorzugsweise weniger als ein Viertel, besonders bevorzugt weniger als ein Fünftel der Längserstreckung D. Auf diese Weise ist gewährleistet, dass die Abstände, über die die Vorspannmittel die Kraft auf den Reflektor aufbringen müssen, im Vergleich zur Längserstreckung D des Reflektors klein sind, so dass hier eine besonders hohe mechanische Stabilität erreicht wird. Damit wird die möglichst exakte Positionierung des Reflektors relativ zu der wenigstens einen LED auch dann gewährleistet, wenn von außen Kräfte, beispielsweise durch Stöße oder Schläge auf wenigstens eines der Bauteile einwirken. Zudem wird der Effekt von Längenveränderungen aufgrund unterschiedlicher Temperaturen minimiert.

Bevorzugt ist der Reflektor einstückig aus einem Glas oder einer Glaskeramik hergestellt. Dadurch wird eine besonders einfache Herstellung möglich, wodurch eine hohe Taktzahl und geringe Herstellungskosten erreicht werden können.

Greifen die Vorspannmittel in entsprechend an der Außenseite des Reflektors vorgesehene Vertiefungen, Nuten oder Rillen ein, hat es sich als vorteilhaft herausgestellt, wenn die Vorspannmittel nur an einer Wandung der jeweiligen Vertiefung anliegen, um das System nicht mechanisch überbestimmt auszugestalten und so die exakte Positionierung des Reflektors relativ zur wenigstens einen LED zu beeinträchtigen Dabei liegen die Vorspannmittel an der Wandung der Vertiefung an, über die sie eine Kraft auf den Reflektor ausüben können, die die wenigstens eine Reflektorkontaktfläche und die wenigstens eine Basiskontaktfläche gegeneinander drückt.

Die Erfindung löst die gestellte Aufgabe zudem mit einem Reflektor für eine oben beschriebene Leuchte. Ein erfindungsgemäßes Verfahren zum Herstellen eines derartigen Reflektors umfasst die Schritte:
a) Pressen des Reflektors aus einem Glas oder einer Glaskeramik,
b) Einbringen der Eintrittsöffnung in den Reflektor, so dass sich die wenigstens eine Reflektorkontaktfläche nicht verformt.

Durch die spezielle Anordnung und Ausgestaltung der wenigstens einen Reflektorkontaktfläche eines Reflektors für eine erfindungsgemäße Leuchte kann die wenigstens eine Reflektorkontaktfläche in der nötigen Genauigkeit und Ebenheit bereits im Pressvorgang hergestellt werden. Zudem kann die Eintrittsöffnung in den Reflektor eingebracht werden, ohne dass sich die Reflektorkontaktfläche verformt, so dass hier eine Nachbearbeitung der Reflektorkontaktfläche nicht nötig ist.

Vorzugsweise umfasst das Einbringen der Eintrittsöffnung ein Durchstoßen des Reflektors an einer Eintrittsstelle mit einem Stößel. Besonders bevorzugt ist dabei nach dem Pressen ein nachträgliches Glätten der wenigstens einen Reflektorkontaktfläche, insbesondere durch Sägen, Fräsen oder Schleifen, nicht nötig.

Das Hotpunchen oder Ausstanzen bzw. Durchstoßen von Löchern in Reflektoren aus Glas oder Glaskeramik ist aus dem Stand der Technik bereits bekannt. Dabei wird der vorher beim Pressen noch geschlossene Reflektorboden im noch heißen Zustand direkt nach dem Pressen oder in wieder erwärmten Zustand nach dem Abkühlen durch einen Stößel durchstoßen. Dabei wird jedoch nicht nur der Boden des Reflektorhalses, in den die Eintrittsöffnung einzubringen ist, durchstoßen und das gewünschte Loch erzeugt, sondern auch der umliegende, im Wesentlichen kreisförmige Bereich des Reflektorhalses stark in Mitleidenschaft gezogen, da er durch den Durchstoßprozess verformt wird. Diese Verformung wird bei einem erfindungsgemäßen Verfahren nicht vermieden, führt jedoch nicht zu Nachteilen, da der verformte Bereich des Reflektorhalses nicht für die Positionierung des Reflektors relativ zu der wenigstens einen LED verwendet wird. Der gegebenenfalls verformte mit der Eintrittsöffnung geöffnete Reflektorhals hat keinen Kontakt zu der wenigstens einen LED oder dem sie tragenden LED-Chip. Insofern kommt es auf die genaue Endkontur dieses Abschnittes des Reflektorhalses nicht an.

Mit Hilfe einer Zeichnung wird nachfolgend ein Ausführungsbeispiel der vorliegenden Erfindung näher erläutert. Es zeigt
- Figur 1 -: eine schematische Schnittdarstellung durch eine Leuchte gemäß dem Stand der Technik,
- Figur 2 -: einen vergrößerten Ausschnitt aus Figur 1,
- Figur 3 -: einen Reflektor für eine Leuchte aus dem Stand der Technik in einer schematischen 3D-Ansicht,
- Figur 4 -: eine schematische Schnittdarstellung durch eine Leuchte gemäß einem ersten Ausführungsbeispiel der vorliegenden Erfindung,
- Figur 5 -: einen vergrößerten Ausschnitt aus Figur 4,
- Figur 6 -: einen Reflektor für eine Leuchte gemäß einem Ausführungsbeispiel der vorliegenden Erfindung in einer schematischen 3D-Ansicht,
- Figur 7 -: einen Reflektor für eine Leuchte gemäß einem zweiten Ausführungsbeispiel der vorliegenden Erfindung in einer schematischen 3D-Ansicht,
- Figur 8-: die schematische Seitenansicht einer Leuchte gemäß einem weiteren Ausführungsbeispiel der vorliegenden Erfindung,
- Figur 9 -: die schematische Schnittdarstellung durch eine Leuchte gemäß einem weiteren Ausführungsbeispiel der vorliegenden Erfindung,

- Figur 10 -: einen Reflektor für eine Leuchte gemäß einem weiteren Ausführungsbeispiel der vorliegenden Erfindung,
- Figur 11 -: eine schematische Teildarstellung einer Leuchte gemäß einem Ausführungsbeispiel der vorliegenden Erfindung, und
- Figur 12 -: einen Reflektor für eine Leuchte gemäß einem weiteren Ausführungsbeispiel der vorliegenden Erfindung in einer schematischen 3D-Ansicht.

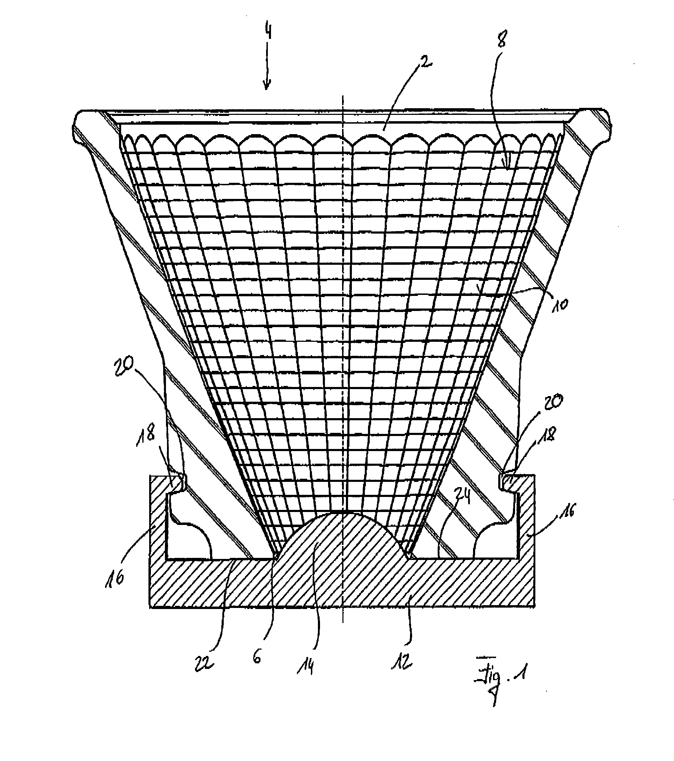

Figur 1 zeigt eine schematische Schnittdarstellung durch eine Leuchte gemäß dem Stand der Technik. Die Leuchte umfasst einen Reflektor 2, der eine Austrittsöffnung 4 und eine Eintrittsöffnung 6 aufweist, und der an einer Reflektorinnenseite 8 Facetten 10 aufweist. Natürlich sind auch unfacettierte Reflektorinnenseiten 8 denkbar.

Die Leuchte verfügt zudem über ein Basisteil 12, auf dem eine LED 14 angeordnet ist, die in Figur 1 als Hügel dargestellt ist. Dabei kann es sich um die eigentliche LED 14 oder eine sich oberhalb des eigentlichen LED-Chips befindliche optische Linse handeln. Möglich ist auch eine einfache oberhalb der eigentlichen LED befindliche Schutzabdeckung, beispielsweise aus Silikon, welche den Halbleiterchip vor Staub und Feuchtigkeit schützen soll.

Seitlich am Basisteil 12 sind zwei Halteelemente 16 angeordnet, die an ihrem oberen Ende jeweils ein Vorspannmittel 18 aufweisen, mit dem sie in dafür vorgesehene Nuten 20 am Reflektor 2 eingreifen. Der Reflektor selbst weist an seiner Unterseite eine Reflektorkontaktfläche 22 auf, die die Eintrittsöffnung 6 umgibt und mit der er vollflächig an einer Basiskontaktfläche 24 anliegt. Dadurch, dass die Reflektorkontaktfläche 22 an der Basiskontaktfläche 24 anliegt, ist eine weitere Verschiebung des Reflektors 2 und/oder des Basisteils 12 aufeinander zu ausgeschlossen. Beide Kontaktflächen 22, 24 sind folglich für die Positionierung des Reflektors 2 relativ zur LED 14 zuständig. Daher müssen sowohl die Reflektorkontaktfläche 22 als auch die Basiskontaktfläche 24 möglichst exakt gearbeitet sein.

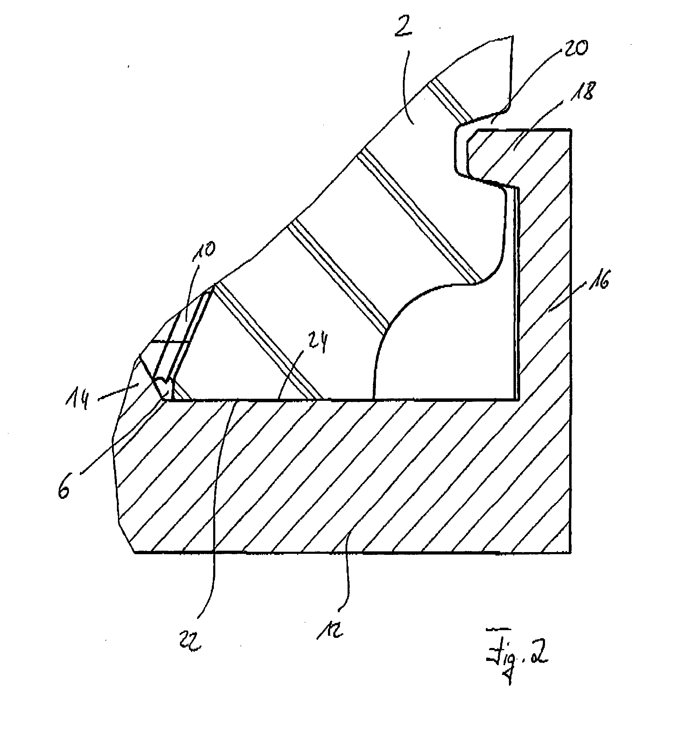

Figur 2 zeigt einen vergrößerten Ausschnitt aus Figur 1, bei dem nochmals zu erkennen ist, dass die Reflektorkontaktfläche 22 an der Basiskontaktfläche 24 anliegt und so für die Positionierung des Reflektors 2 relativ zur LED 14 zuständig ist. Das Vorspannmittel 18 am Halteelement 16 greift in die Nut 20 ein und liegt ebenfalls am Reflektor 2 an. Dadurch wird jedoch eine Bewegung des Reflektors 2 auf das Basisteil 12 zu nicht verhindert, sondern lediglich eine Vorspannkraft auf den Reflektor 2 aufgebracht. Durch diese Vorspannkraft werden die wenigstens eine Reflektorkontaktfläche 22 und die wenigstens eine Basiskontaktfläche 24 gegeneinander gedrückt. Daher müssen die Nut 20 und beispielsweise die Länge des Halteelementes 16 nicht so exakt gearbeitet sein wie die Reflektorkontaktfläche 22 und die Basiskontaktfläche 24. Hier ist lediglich wichtig, dass eine Vorspannkraft auf den Reflektor 2 ausgeübt wird. Die Positionierung des Reflektors 2 relativ zur LED 14 wird dadurch nicht beeinflusst.

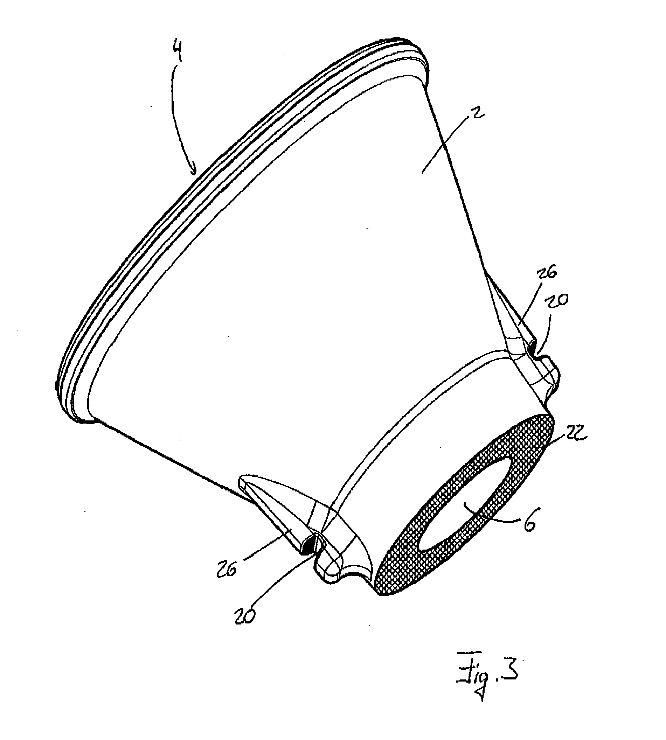

Figur 3 zeigt den Reflektor 2 aus den Figuren 1 und 2 in einer schematischen 3D-Ansicht. Man erkennt die Reflektorkontaktfläche 22, die die Eintrittsöffnung 6 umgibt. Die Reflektorkontaktfläche 22 ist dabei durch Fräsen oder Sägen nachbearbeitet, um die gewünschten Genauigkeiten einhalten zu können. Am Reflektor 2 sind die Nuten 20 in dafür vorgesehene Stege 26 eingebracht. Zu der Toleranz, die bei den Konturmaßen des Reflektors 2 eine Rolle spielt, und die beispielsweise +/- 0,2 mm betragen kann, kommt neben den Toleranzen der eigentlichen Presswerkzeuge nun eine weitere Toleranz des Sägeschnitts bzw. der Fräsebene relativ zur Außenkontur des Reflektors 2. Diese können ebenfalls in der Größenordnung von +/- 0,2 mm bis +/- 0,3 mm liegen, so dass die tatsächliche Gesamttoleranz teilweise mehr als verdoppelt wird. Dies hat erhöhte Ungenauigkeiten und eine schlechtere Positionierung des Reflektors 2 relativ zur LED 14 zur Folge.

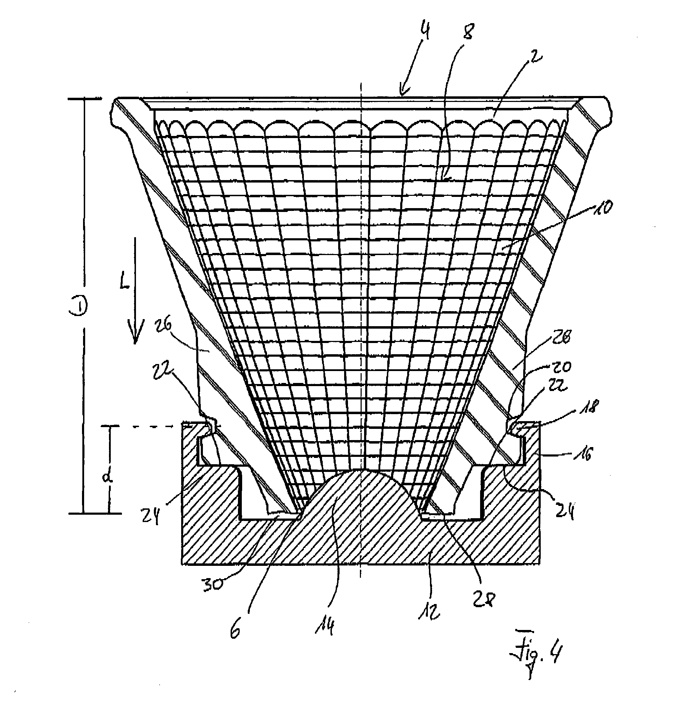

Figur 4 zeigt eine Leuchte gemäß einem ersten Ausführungsbeispiel der vorliegenden Erfindung. Man erkennt die Austrittsöffnung 4, die Eintrittsöffnung 6 und die Reflektorinnenseite 8, an der Facetten 10 angeordnet sind. In die Eintrittsöffnung 6 ragt die LED 14 hinein, die am Basisteil 12 festgelegt ist. Man erkennt jedoch, dass die Reflektorkontaktfläche 22 nicht mehr auf der gleichen Höhe angeordnet ist, wie die Eintrittsöffnung 6, sondern in Längsrichtung L zwischen der Eintrittsöffnung und der Austrittsöffnung 4. Daher ist auch die Basiskontaktfläche 24 des Basisteils 12 entsprechend versetzt.

Man erkennt folglich, dass der Reflektor 2 zwar über Anteile verfügt, die weiter unten angeordnet sind als die Reflektorkontaktfläche 22, beispielsweise eine die Eintrittsöffnung 6 umgebende Bodenfläche 28. Direkt unterhalb der Reflektorkontaktflächen 22 befindet sich jedoch kein weiterer Anteil des Reflektors 2. Dies entspricht der erfindungsgemäßen Ausgestaltung des Reflektors, die so geformt ist, dass eine Projektion der wenigstens einen Reflektorkontaktfläche 22 in Längsrichtung L des Reflektors 2 hinterschneidungsfrei ist. Am Reflektor 2 sind weiterhin zwei Stege 26 angeordnet, die über jeweils eine Nut 20 verfügen, in die Vorspannmittel 18 an Halteelementen 16 eingreifen. Diese dienen jedoch lediglich dazu, eine Vorspannkraft auf den Reflektor 2 auszuüben und ihn so in seiner durch die Reflektorkontaktfläche 22 und die Basiskontaktfläche 24 definierten Lage zu halten. Auf die Ausrichtung des Reflektors 2 relativ zur LED 14 haben diese Elemente keinen Einfluss.

In Figur 4 ist zudem eine Längserstreckung D des Reflektors 2 und ein Abstand d dargestellt, der der Abstand zwischen der Nut 20 und der Eintrittsöffnung 6 ist. Man erkennt, dass der Abstand d im Vergleich zu der Längserstreckung D klein ist. Dadurch wird eine hohe mechanische Stabilität erreicht.

Zwischen der Bodenfläche 28 des Reflektors 2 und der dieser gegenüberliegenden Fläche des Basisteils 12 befindet sich ein Spalt 30, der beispielsweise zur Kühlung der Leuchte verwendet werden kann.

Die Vorspannmittel 18 und die Halteelemente 16 sind beispielhaft in Form von Hakenelementen gezeigt. Natürlich sind auch andere Arten von Vorspannmitteln 18 denkbar.

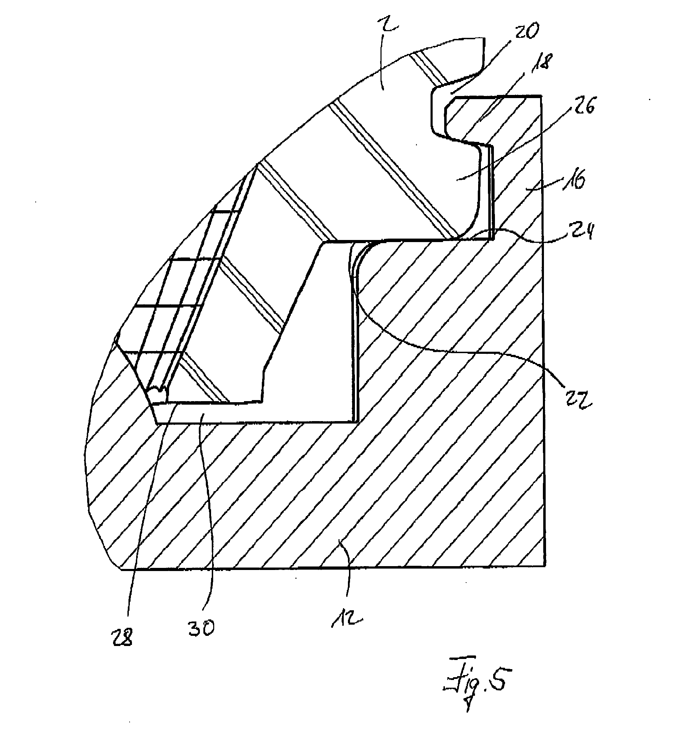

Figur 5 zeigt einen vergrößerten Ausschnitt aus Figur 4. In der vergrößerten Darstellung ist gut zu erkennen, dass die Ausdehnung des Spaltes 30 zwischen der Bodenfläche 28 und dem Basisteil 12 lediglich durch die Reflektorkontaktfläche 22 und die Basiskontaktfläche 24, nicht jedoch durch den Kontakt zwischen dem Vorspannmittel 18 und der einen Seite der Nut 20 bestimmt wird. Um besonders deutlich zu machen, dass die Bodenfläche 28 für eine derartige Anordnung ungeeignet ist, ist sie gewellt und leicht angeschrägt dargestellt.

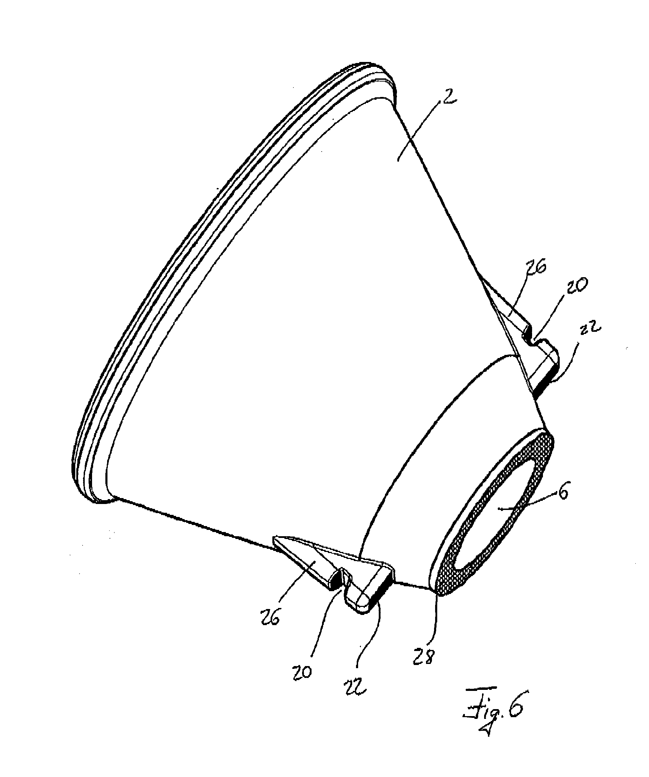

Figur 6 zeigt den Reflektor 2 aus den Figuren 4 und 5 in einer schematischen 3D-Ansicht. Die unregelmäßig geformte Bodenfläche 28, die die Eintrittsöffnung 6 umgibt, ist aufgrund ihrer unregelmäßigen Form und Kontur für eine exakte Positionierung des Reflektors 2 relativ zur LED 14 des Basisteils 12 nicht geeignet. Dafür sind die Reflektorkontaktflächen 22 an der Unterseite der Stege 26 vorgesehen. In den Stegen 26 befinden sich wieder die Nuten 20, in die Vorspannelemente 18 eingreifen können. Dabei kommt es bevorzugt nur zum Kontakt zwischen dem Vorspannmittel 18 und der Nut 20 an einer Seitenwandung der Nut 20, um eine mechanische Überbestimmtheit des Systems zu vermeiden.

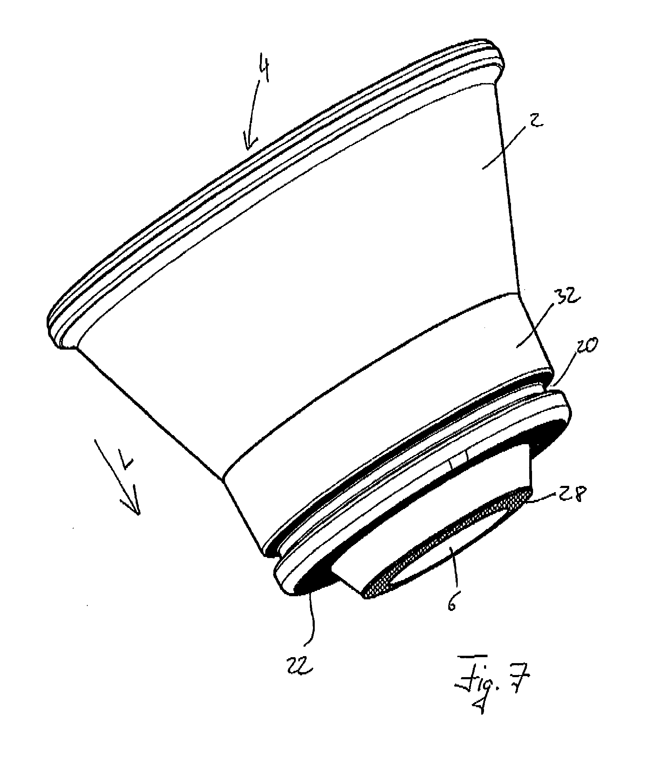

Figur 7 zeigt den Reflektor 2 für eine weitere Ausführungsform der vorliegenden Erfindung in einer schematischen 3D-Ansicht. Die Bodenfläche 28 umgibt die Eintrittsöffnung 6 des Reflektors 2. Anders als der in Figur 6 gezeigte Reflektor 2 verfügt der in Figur 7 gezeigte Reflektor 2 über eine umlaufende Reflektorkontaktfläche 22. Damit kann der Reflektor 2 in jeder Winkelorientierung mit dem entsprechenden Basisteil 12 verbunden werden. Entsprechend verfügt der Reflektor 2 nicht über einzelne Stege 26, sondern um eine umlaufende Auswölbung 32. Diese kann auch als ein einzelner umlaufender Steg gesehen werden. In diesen ist die nun ebenfalls umlaufende Nut 20 eingebracht, in die am Basisteil 12 angeordnete Vorspannmittel 18 eingreifen können. An der Unterseite der Auswölbung 32 befindet sich die eben und glatt gepresste Reflektorkontaktfläche 22. Verfügt auch das Basisteil 12 über eine umlaufende Basiskontaktfläche 24, liegt die Reflektorkontaktfläche 22 umlaufend vollflächig auf dieser Basiskontaktfläche 24 auf. Alternativ kann auch nur eine abschnittsweise Berührung der beiden Kontaktflächen 24, 22 vorgesehen sein. Da auch diese in Figur 7 gezeigte Reflektorkontaktfläche 22 in Längsrichtung L des Reflektors zwischen der Eintrittsöffnung 6 und der Austrittsöffnung 4 angeordnet ist, wird auch diese Reflektorkontaktfläche 22 bei einem gegebenenfalls durchzuführenden Hotpunch-Verfahren, bei dem die Eintrittsöffnung 6 in die Bodenfläche 28 eingebracht wird, nicht in Mitleidenschaft gezogen. Auch bei dieser Ausgestaltung befindet sich in Längsrichtung L direkt unterhalb der Reflektorkontaktfläche 22 kein weiterer Bestandteil des Reflektors 2, so dass die Projektion der wenigstens einen Reflektorkontaktfläche 22 in Längsrichtung L des Reflektors 2 hinterschneidungsfrei ist.

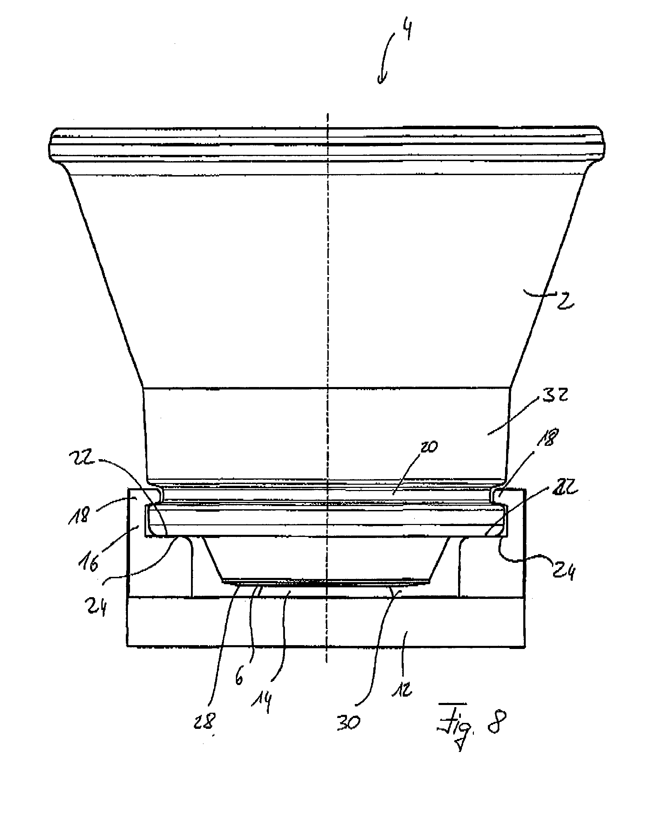

Figur 8 zeigt den Reflektor 2 aus Figur 7 in einer schematischen Seitenansicht in Verbindung mit dem Basisteil 12. Direkt neben der Eintrittsöffnung 6, in die die LED 14 hineinragt ist die ringförmige Bodenfläche 28 zu erkennen, deren Kontur für die Positionierung des Reflektors 2 unerheblich ist. Man erkennt die umlaufende Nut 20, in die die Vorspannmittel 18, die an den Halteelementen 16 angeordnet sind, eingreifen. Hier sind natürlich auch alle anderen Formen von bekannten Vorspannmitteln 18 denkbar. So können dies beispielsweise eine Mehrzahl von über den Umfang verteilt angebrachten Haken sein, die in bestimmten Abständen am Basisteil 12 angeordnet sind und in die ringförmige Nut 20 eingreifen. Natürlich muss die Nut 20 nicht vollständig umlaufend vorhanden sein. Ausreichend ist, wenn sie dort wo Vorspannmittel 18 vorgesehen sind, die in die Nut 20 eingreifen sollen, ausgebildet ist. Auch die in Figur 8 suggerierte Rotationssymmetrie des Reflektors 2 und des Basisteils 12 ist lediglich bevorzugt, für die vorliegende Erfindung jedoch nicht notwendig. Auch in Figur 8 ist wieder deutlich der Spalt 30 zwischen der Bodenfläche 28 und dem Basisteil 12 erkennbar. Auch hier ist der Kontakt zwischen den Vorspannmitteln 18 und der Nut 20 für die Positionierung des Reflektors relativ zur LED nicht ausschlaggebend, sondern hält den Reflektor lediglich in seiner durch die Reflektorkontaktfläche 22 und die Basiskontaktfläche 24 definierten Position.

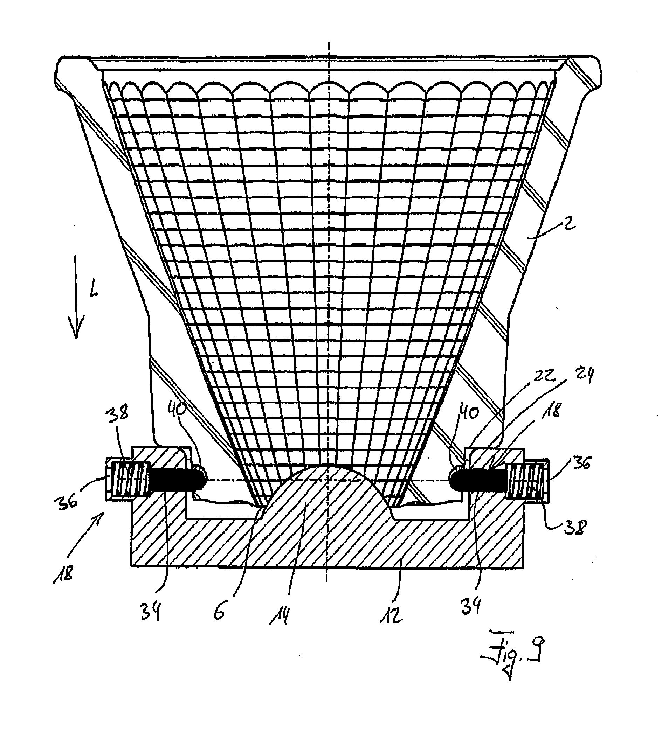

Figur 9 zeigt eine schematische Schnittdarstellung durch eine Leuchte gemäß einem weiteren Ausführungsbeispiel der vorliegenden Erfindung. Anders als bei den bisher gezeigten Ausführungsformen sind die Vorspannmittel 18 nicht mehr einstückig mit dem Basisteil 12 ausgebildet Es handelt sich vielmehr um Stifte 34, die in dafür vorgesehenen Bohrungen 36 durch Federelemente 38 federbelastet gelagert sind. Wird nun der Reflektor 2 von oben eingeführt, werden die Stifte 34 gegen die Federelemente 38 nach außen gedrückt und schnappen erst wieder zurück, wenn die Stifte 34 in dafür vorgesehene Ausnehmungen 40 eingreifen können. Auch hier kommt es jedoch lediglich zu einer Vorspannung, so dass eine Kraft auf den Reflektor 2 ausgeübt wird. Durch diese Kraft werden die wenigstens eine Reflektorkontaktfläche 22 und die wenigstens eine Basiskontaktfläche 24 aufeinander gedrückt. Man erkennt in Figur 9, dass die Stifte 34 nicht zentral in die Ausnehmungen 40 eingreifen, sondern lediglich an einer, der unteren, Wandung der Ausnehmung 40 anliegen und so die Kraft auf den Reflektor 2 ausüben. Die eigentliche Positionierung des Reflektors 2 relativ zur LED 14 geschieht über die nun oberhalb der Vorspannmittel 18 angeordneten Reflektorkontaktflächen 22 und der entsprechenden Basiskontaktflächen 24.

Obwohl sich die Ausnehmungen 40 für die Stifte 34 im gezeigten Ausführungsbeispiel weiter unten, also in Längsrichtung L zwischen der Eintrittsöffnung 6 und der Reflektorkontaktfläche 22, befinden, ist direkt unterhalb der einzelnen Reflektorkontaktflächen 22 kein weiterer Anteil des Reflektors 2 angeordnet, so dass auch hier eine Projektion der wenigstens einen Reflektorkontaktfläche 22 in Längsrichtung L des Reflektors 2 hinterschneidungsfrei ist.

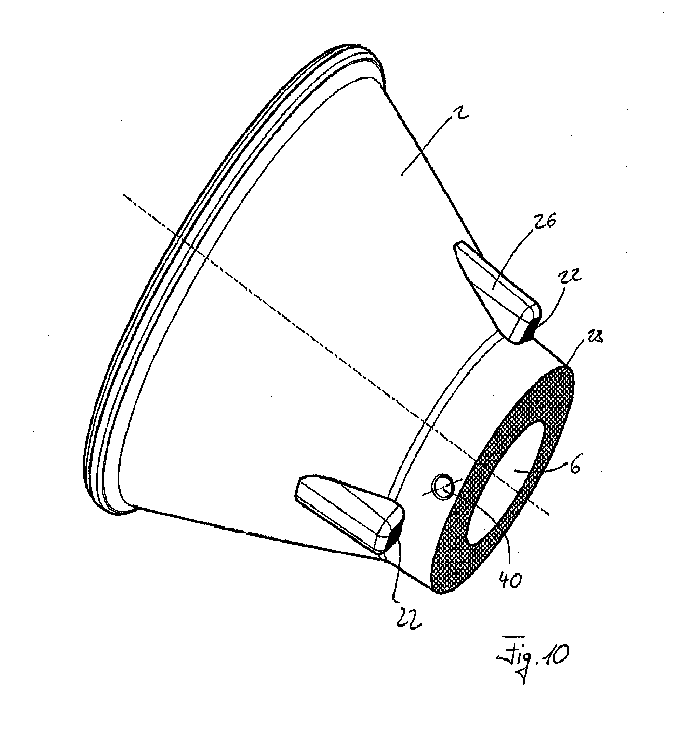

Figur 10 zeigt den Reflektor aus Figur 9 in einer schematischen 3D-Ansicht. Der Reflektor 2 verfügt über drei Stege 26, von denen zwei gezeigt sind. Die Stege sind um jeweils 120° gegeneinander versetzt an der Außenseite des Reflektors 2 angeordnet. An ihrer Unterseite befinden sich die Reflektorkontaktflächen 22, die glatt gepresst sind. Am Reflektorhals befinden sich die Ausnehmungen 40, in die die in Figur 9 gezeigten Stifte 34, die als Vorspannmittel 18 dienen, eingreifen können. Auch in diesem gezeigten Ausführungsbeispiel ist die Bodenfläche 28 für die Positionierung des Reflektors 2 relativ zur LED 14 unerheblich.

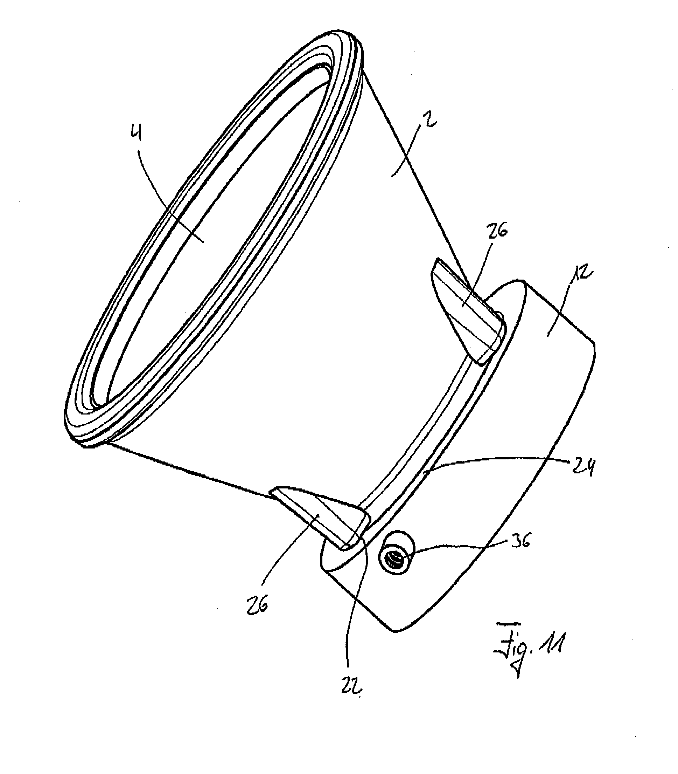

Figur 11 zeigt den Reflektor 2 aus Figur 10, der mit dem Basisteil 12 verbunden ist. Man erkennt am Basisteil 12 eine der Bohrungen 36, in denen ein Stift 34 geführt wird, der als Vorspannmittel 18 dient. Der Reflektor 2 verfügt über drei Stege 26, an denen jeweils eine Reflektorkontaktfläche 22 vorgesehen ist. Das Basisteil 12 hingegen verfügt über eine umlaufende Basiskontaktfläche 24.

Natürlich ist es ausreichend, wenn lediglich in den Bereichen eine Basiskontaktfläche 24 vorgesehen ist, in denen sich auch eine Reflektorkontaktfläche 22 befindet. Dadurch können Ausnehmungen entstehen, die insbesondere aus thermischer Sicht, beispielsweise zum Kühlen der Anordnung, sinnvoll sein können. In diesem Fall muss die von der LED 14 erzeugte Wärme nicht durch die Austrittsöffnung 4 den Reflektor 2 verlassen, sondern kann durch die Eintrittsöffnung 6 und den Spalt 30 zwischen dem Reflektor 2 und dem Basisteil 12 entweichen.

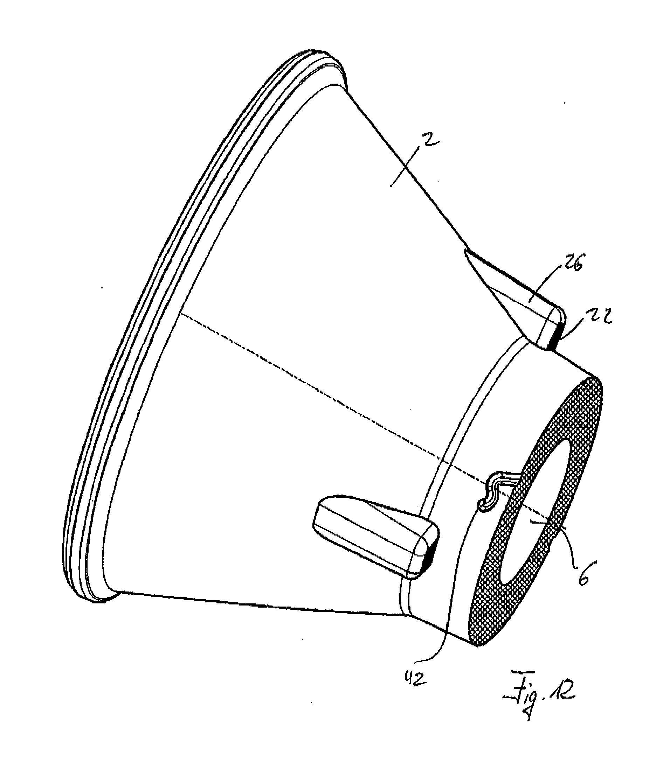

Figur 12 zeigt eine schematische Ansicht des Reflektors 2 für ein weiteres Ausführungsbeispiel der vorliegenden Erfindung. Der Unterschied zum bisher gezeigten Reflektor 2 besteht in einer Aussparung 42, in die ein am Basisteil 12 vorgesehenes Stiftelement eingreifen kann. Natürlich kann der Reflektor 2 über mehrere dieser Aussparungen 42 verfügen, die beispielsweise äquidistant über seinen Umfang verteilt sind. Die entsprechenden Stiftelemente am Basisteil 12 greifen in die Aussparungen 42 ein, so dass nach Art eines Bajonettverschlusses die beiden Bauteile miteinander verbunden und in Vorspannung gebracht werden können.

Auch in diesem Fall befindet sich die Aussparung 42 in einem Reflektorhals, der sich weiter unten, also weiter zur Eintrittsöffnung 6 befindet, als die Reflektorkontaktflächen 22. Dennoch befindet sich direkt unterhalb dieser Reflektorkontaktflächen 22, also innerhalb der Projektion in Längsrichtung L des Reflektors 2, kein Reflektoranteil, so dass diese Projektion auch hier hinterschneidungsfrei ist.

### Bezugszeichenliste

| | |
|---|---|
| L | Längsrichtung |
| D | Längserstreckung |
| d | Abstand |
| 2 | Reflektor |
| 4 | Austrittsöffnung |
| 6 | Eintrittsöffnung |
| 8 | Reflektorinnenseite |
| 10 | Facette |
| 12 | Basisteil |
| 14 | LED |
| 16 | Halteelement |
| 18 | Vorspannmittel |
| 20 | Nut |
| 22 | Reflektorkontaktfläche |
| 24 | Basiskontaktfläche |
| 26 | Steg |
| 28 | Bodenfläche |
| 30 | Spalt |
| 32 | Auswölbung |
| 34 | Stift |
| 36 | Bohrung |
| 38 | Federelement |
| 40 | Ausnehmung |
| 42 | Aussparung |

## Patentansprüche

1. Leuchte mit
a. wenigstens einer LED (14),
b. einem Basisteil (12),
- das mit der wenigstens einen LED (14) starr verbunden ist und
- das wenigstens eine Basiskontaktfläche (24) aufweist, sowie
- einem Reflektor (2),
- der wenigstens eine Reflektorkontaktfläche (22),
- eine Eintrittsöffnung (6) und eine Austrittsöffnung (4) und
- eine Längsrichtung (L), die von der Austrittsöffnung (4) zu der Eintrittsöffnung (6) verläuft, aufweist und
- der mit dem Basisteil (12) verbindbar ist,
wobei die wenigstens eine Reflektorkontaktfläche (22) in Längsrichtung (L) zwischen der Eintrittsöffnung (6) und der Austrittsöffnung (4) angeordnet ist und die wenigstens eine Basiskontaktfläche (24) an der wenigstens einen Reflektorkontaktfläche (22) anliegt und so eine Verschiebung des Basisteils (12) und/oder des Reflektors (2) aufeinander zu verhindert, wenn der Reflektor (2) mit dem Basisteil (12) verbunden ist,
**dadurch gekennzeichnet, dass**
der Reflektor (2) so geformt ist, dass eine Projektion der wenigstens einen Reflektorkontaktfläche (22) in Längsrichtung (L) des Reflektors (2) hinterschneidungsfrei ist.

2. Leuchte nach Anspruch 1, **gekennzeichnet durch** Vorspannmittel (18), die die wenigstens eine Reflektorkontaktfläche (22) gegen die wenigstens eine Basiskontaktfläche (24) vorspannen.

3. Leuchte nach Anspruch 2, **dadurch gekennzeichnet, dass** der Reflektor (2) über eine Außenfläche verfügt, die wenigstens eine Vertiefung, insbesondere Nut (20) aufweist, in die die Vorspannmittel (18) eingreifen, wenn der Reflektor (2) mit dem Basisteil (12) verbunden ist.

4. Leuchte nach einem der vorstehenden Ansprüche, **gekennzeichnet durch** wenigstens zwei Reflektorkontaktflächen (22) und wenigstens zwei Basiskontaktflächen (24).

5. Leuchte nach einem der vorstehenden Ansprüche, **dadurch gekennzeichnet, dass** der Reflektor (2) entlang seiner Längsrichtung (L) eine Längserstreckung (D) aufweist und ein Abstand (d) der wenigstens einen Vertiefung, insbesondere Nut (20), zu der Eintrittsöffnung (6) in Längsrichtung (L) kleiner ist als ein Drittel, vorzugsweise kleiner als ein Viertel, besonders bevorzugt kleiner als ein Fünftel der Längserstreckung (D) ist.

6. Leuchte nach einem der vorstehenden Ansprüche, **dadurch gekennzeichnet, dass** der Reflektor (2) einstückig aus einem Glas oder einer Glaskeramik hergestellt ist.

7. Reflektor (2) für eine Leuchte nach einem der vorstehenden Ansprüche.

8. Verfahren zum Herstellen eines Reflektors (2) nach Anspruch 7, mit den Schritten:
a) Pressen des Reflektors (2) aus einem Glas oder einer Glaskeramik,
b) Einbringen der Eintrittsöffnung (6) in den Reflektor (2) so, dass sich die wenigstens eine Reflektorkontaktfläche (22) nicht verformt.

9. Verfahren nach Anspruch 8, **dadurch gekennzeichnet, dass** das Einbringen der Eintrittsöffnung (6) ein Durchstoßen des Reflektors (2) an einer Eintrittsstelle mit einem Stößel umfasst.

10. Verfahren nach Anspruch 8 oder 9, **dadurch gekennzeichnet, dass** die wenigstens eine Reflektorkontaktfläche (22) nach dem Pressen insbesondere nicht durch Sägen, Fräsen oder Schleifen geglättet wird.
